# EUROPÄISCHE PATENTANMELDUNG

(11) **EP 2 787 131 A1**
(43) Veröffentlichungstag der Anmeldung: **08.10.2014**
(21) Anmeldenummer: 14162115.1
(22) Anmeldetag: 27.03.2014
(51) Int. Cl.: E03B 9/04, F16B 7/10

(54) **Höhenverstellbarer Hydrant**

(30) Priorität: 02.04.2013 CH 7002013
(71) Anmelder: vonRoll infratec (investment) ag, 6300 Zug (CH)
(72) Erfinder: Buri, Daniel, 3312 Fraubrunnen (CH)
(74) Vertreter: OK pat AG

(57) **Zusammenfassung**

Ein höhenverstellbarer Hydrant (60) umfasst ein Mantelrohr (61) und ein in diesem drehbar und höhenverschieblich angeordnetes Teleskoprohr (62) mit je einem kreisrunden Querschnitt. Das Teleskoprohr (62) ist entsprechend einer gewählten Grabentiefe mittels einem am Mantelrohr (61) feststehenden Flansch (63) und einem beweglichen Spannflansch (64) am Mantelrohr (61) fixierbar. An seinem Aussenumfang weist das Teleskoprohr (62) eine Vielzahl radial angeordneter, zu einander beabstandeter Ringnuten (67) auf. Der feststehende Flansch (63) und der bewegliche Spannflansch (64) sind teilkreisförmig ausgebildet. Am feststehenden Flansch (63) und/oder am beweglichen Spannflansch (64) sind radial gegen innen abstehende, der Nutenweite der Ringnuten (67) angepasste Haltenocken (69',69) angeordnet, die entsprechend der gewählten Grabentiefe in zumindest eine der Ringnuten (67) des Teleskoprohrs (62) eingreifend ausgebildet sind. Vorzugsweise weist das Mantelrohr (61) einen Sitz (73) für den mindestens einen beweglichen Spannflansch (64) auf, so dass ein diesem Sitz angepasster beweglicher Spannflansch (64) im verriegelten Zustand einen Formschluss mit diesem Sitz eingeht.

## Beschreibung

Die vorliegende Erfindung betrifft gemäss dem Oberbegriff des unabhängigen Anspruchs 1 einen höhenverstellbaren Hydranten. Typischerweise umfassen derartige höhenverstellbare Hydranten ein Mantelrohr und ein in diesem drehbar und höhenverschieblich angeordnetes Teleskoprohr, welches entsprechend einer gewählten Grabentiefe mittels einer Verbindung zwischen zumindest einem am Mantelrohr feststehenden Flansch und mindestens einem beweglichen Spannflansch fixierbar ist. Dabei weist ein solches Teleskoprohr typischerweise an seinem Aussenumfang eine Vielzahl radial angeordneter, zu einander beabstandeter Ringnuten mit einer konstanten Nutenweite auf.

Hydranten sind schon seit langer Zeit und in sehr vielen unterschiedlichen Ausführungen bekannt. Sie dienen in erster Linie als Armaturen zur Wasserentnahme aus einem öffentlichen (häufig kommunalen) oder privaten Versorgungsnetz und beliefern beispielsweise die Feuerwehr mit Löschwasser. Es sind hauptsächlich zwei verschiedene Ausführungen bekannt, nämlich der Unterflurhydrant und der Überflurhydrant. Beide können ein 1- oder 2-teiliges Steigrohr oder Mantelrohr bzw. Ventilgehäuse umfassen, welches beispielsweise mit seinem unteren Ende an eine Versorgungsleitung bzw. einen Hydranteneinlauf angeschlossen werden kann.

Ein Beispiel eines Überflurhydranten ist aus CH 675 139 A5 bekannt und hier als Vertikalschnitt in Figur 1 abgebildet. Dieser Überflurhydrant setzt sich aus einem Einlaufrohr 1, einem Steigrohr 2 und einem auf dem Steigrohr 2 aufgesetzten Aufsatzrohr 3 zusammen. Das Einlaufrohr 1 ist hier mit einem Einlaufbogen 13 dargestellt. Das Einlaufrohr 1 kann jedoch auch als gerades Rohrstück ausgebildet sein (gestrichelt eingezeichnet, siehe Pfeil). Im Oberteil des Einlaufrohrs 1 ist ein Sitz 4 eines Hauptabschlussventils 5 angeordnet, dessen Ventilkörper 6 an einer in das Steigrohr 2 ragenden Ventilstange 7 mit einer im Wesentlichen vertikalen Achse 14 gelagert ist. In diesem Oberteil des Einlaufrohrs 1 ist in der Nähe des Ventilsitzes 4 ein als Rückschlagventil ausgebildetes Entwässerungsventil 33 mit einer Kugel 34 angeordnet. An die Ventilstange 7 schliesst eine in einem Spindellager 8 geführte Spindel 9 an, welche mit einer an der Ventilstange 7 befestigten Spindelmutter 10 zusammenwirkt. Die Spindelmutter 10 weist einen Finger 11 auf, mit welchem sie in einer auf der Innenseite des Steigrohres 2 angeordneten Führung 12 unverdrehbar geführt ist. Auf der Oberseite der Spindel 9 ist ein hülsenförmiger Spindelaufsatz 15 befestigt, dessen Bohrungsoberteil als Vierkantbohrung 16 ausgebildet ist. In die Vierkantbohrung 16 ist eine Spindelverlängerung 17 eingeführt. Die Spindelverlängerung 17 weist eine Achse 27 auf und ragt durch einen, auf das obere Ende des Aufsatzrohrs 3 aufgesetzten Gehäusedeckel 18 und hat am Ende einen Betätigungsvierkant 19. Auf dem Gehäusedeckel 18 ist ein Schutzdeckelunterteil 20 befestigt, an welchem ein Schutzdeckeloberteil 21 drehbar gelagert ist. Im Gehäusedeckel 18 sind zwei Seitenventile 22,23 eingebaut, deren Spindeln 24,25 mit je einem Betätigungsvierkant 26, in dem von den Schutzdeckelteilen 20,21 gebildeten Raum ragen und durch Dichtungen abgedichtet sind. Diese Seitenventile 22,23 weisen je einen Ventilanschluss 28,28' auf, die durch einen Schraubdeckel 29 abgeschlossen sind. Durch eine Bohrung 30 wird die Belüftung des Innenraums 31 des Hydranten bei offenem Seitenventil 22,23 und dadurch eine Entleerung über das Entwässerungsventil 34 ermöglicht. Im Zentrum des Schutzdeckeloberteils 21 ist ein Verschlusszapfen 32 befestigt, auf welchem zum Öffnen und Schliessen des Schutzdeckeloberteils 21 ein Schlüssel mit einer Vierkantbohrung (nicht dargestellt) aufgesetzt werden kann. Hydranten mit einem solchen Hydrantenhauptventil (bzw. Hauptabschlussventil 5) sind seit vielen Jahren in bzw. an Schweizer Wasserverteilungsnetzen installiert und haben sich an sich bewährt.

Höhenverstellbare Hydranten weisen gegenüber den wie eben beschriebenen, konventionellen Hydranten den Vorteil auf, dass deren Einbauhöhe dem Gelände angepasst werden kann, ohne dass am Hydranten grössere Nacharbeiten ausgeführt werden müssten. Dies gelingt dadurch, dass das Steigrohr des Hydranten zweiteilig ausgeführt ist, wobei ein Teleskoprohr höhenverschieblich in einem Mantelrohr angeordnet ist. Beim ersten Einbau eines höhenverstellbaren Hydranten kann dessen Bauhöhe der aktuellen Geländeführung angepasst werden. Falls sich die Geländeoberfläche später durch Erdbewegungen ändern sollte, kann die Höheneinstellung des Teleskoprohrs einfach so gegenüber dem Mantelrohr verändert und dann fixiert werden, dass der modifizierte höhenverstellbare Hydrant in seiner Einbautiefe perfekt an das veränderte Gelände angepasst ist.

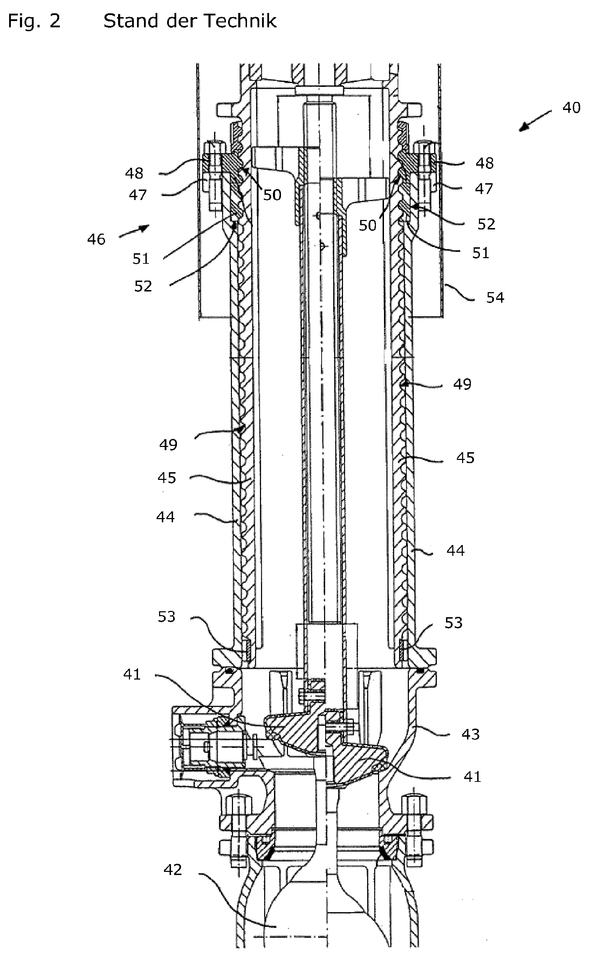

Aus dem Dokument DE 100 28 655 A1 ist ein derartiger, stufenlos höhenverstellbarer Hydrant 40 mit einem Hauptabsperrorgan 41 und einem als Kugel ausgebildeten Doppelabsperrorgan 42 bekannt und hier als teilweiser Vertikalschnitt in Figur 2 abgebildet. Dieser Hydrant 40 umfasst ein stehend über einem Hauptventilgehäuse 43 angeordnetes Mantelrohr 44 und ein in diesem drehbar und höhenverschieblich angeordnetes Teleskopsteigrohr 45 zur Aufnahme eines Aufsatzrohres. Das Teleskopsteigrohr 45 ist entsprechend einer gewählten Grabentiefe mittels einer Verbindung 46 zwischen einem am Mantelrohr 44 feststehenden Gegenflansch 47 und mindestens einem beweglichen Spannflansch 48 fixierbar. Dabei weist ein solches Teleskopsteigrohr 45 an seinem Aussenumfang eine Vielzahl als Aussengewinde ausgebildete Ringnuten 49 auf. Der bewegliche Spannflansch 48 der Verbindung 46 weist ein zum Aussengewinde 49 des Teleskopsteigrohrs 45 komplementäres Innengewinde 50 auf. Gegenflansch 47 und Spannflansch 48 wirken zum formschlüssigen Zentrieren der beiden Rohre 44,45 zusammen. Eine Gewindedichtung 51 ist am Umfang des Teleskopsteigrohrs 45 angeordnet und wird beim Festziehen des Spannflanschs 48 auf den Gegenflansch 47 in einer umlaufenden Vertiefung 52 des feststehenden Gegenflanschs 47 so deformiert, dass eine formschlüssige, dichte Verbindung zwischen den beiden Rohren 44,45 entsteht. Ein am Teleskopsteigrohr 45 angeordneter Führungsring 53 und/oder ein um den Hydranten 40 herum angeordneter Fundamentring 54 können ebenfalls vorgesehen sein.

Aus dem Dokument EP 0 717 156 B1 ist ebenfalls ein höhenverstellbarer Hydrant bekannt, der im Unterschied zum aus dem Dokument DE 100 28 655 A1 bekannten Hydranten ein stehendes, das Hauptventilgehäuse umfassendes Mantelrohr und ein ebenfalls in diesem drehbar und höhenverschieblich angeordnetes Teleskoprohr zur Aufnahme eines Aufsatzrohres aufweist. Das Teleskoprohr dieses Hydranten weist eine Vielzahl radial angeordneter, zu einander beabstandeter Ringnuten mit einer konstanten Nutenweite auf. Ein beweglicher Spannflansch 48 und ein fix am Teleskoprohr angeordneter Gegenflansch wirken zum formschlüssigen Zentrieren von Mantelrohr und Teleskoprohr zusammen, dabei wird beim Festziehen des Spannflanschs auf den Gegenflansch ein in einer umlaufenden Ringnut angeordneter Dichtring so deformiert, dass eine formschlüssige, dichte Verbindung zwischen den beiden Rohren entsteht. Wieder andere höhenverstellbare Hydranten umfassen ein im Mantelrohr höhenbewegliches Teleskoprohr mit einer glatten äusseren Oberfläche, auf welcher zumindest eine umlaufende Dichtung mit geeigneten Mitteln angepresst bzw. deformiert und das Teleskoprohr so gegenüber dem Mantelrohr abgedichtet wird (vgl. z.B. DE 100 28 655 A1 oder EP 0 791 695 B1).

Es ist die Aufgabe der vorliegenden Erfindung, einen alternativen höhenverstellbaren Hydranten vorzuschlagen.

Diese Aufgabe wird mit einem höhenverstellbaren Hydranten gelöst, der die Merkmale des unabhängigen Anspruchs 1 umfasst. Dieser erfindungsgemässe höhenverstellbare Hydrant umfasst ein Mantelrohr und ein in diesem drehbar und höhenverschieblich angeordnetes Teleskoprohr mit je einem kreisrunden Querschnitt. Das Teleskoprohr ist entsprechend einer gewählten Grabentiefe mittels einer Verbindung zwischen zumindest einem am Mantelrohr feststehenden Flansch und mindestens einem beweglichen Spannflansch am Mantelrohr fixierbar. Dabei weist das Teleskoprohr an seinem Aussenumfang eine Vielzahl radial angeordneter, zu einander beabstandeter Ringnuten mit einer konstanten Nutenweite auf. Der erfindungsgemässe höhenverstellbare Hydrant ist dadurch gekennzeichnet, dass der zumindest eine feststehende Flansch und der zumindest eine bewegliche Spannflansch teilkreisförmig ausgebildet sind, wobei zumindest je ein radial um ein Überstehmass gegen innen abstehender, mit seiner Breite der Nutenweite der Ringnuten angepasster Haltenocken an einem beweglichen Spannflansch, oder an einem feststehenden Flansch, oder an einem beweglichen Spannflansch und an einem feststehenden Flansch mit jeweils einer bestimmten Länge angeordnet ist, und wobei der zumindest eine Haltenocken entsprechend der gewählten Grabentiefe in zumindest eine der Ringnuten des Teleskoprohrs eingreifend ausgebildet ist.

Diese einfache Ausbildung des Teleskoprohrs hat den Vorteil, dass das Teleskoprohr einfach in die gewünschte Höhenlage ausgezogen werden und dann in dieser Höhenlage durch Verriegeln des zumindest einen beweglichen Spannflanschs und damit durch das Eindringen des zumindest einen Haltenockens am feststehenden Flansch oder am beweglichen Spannflansch in eine der Ringnuten am Aussenumfang des Teleskoprohrs fixiert werden kann.

Vorzugsweise umfasst das Mantelrohr zur stabiler Verbindung mit dem Teleskoprohr an einem oberen Ende einen ringförmigen Aufsatz, über dem ein im Wesentlichen halbkreisförmiger Sitz für den mindestens einen beweglichen Spannflansch und ein im Wesentlichen halbkreisförmiger, feststehender Flansch angeordnet sind. Dabei umfasst der Sitz eine Auflagefläche, einen ersten Haltering und eine erste Haltenute. Des Weiteren ist der bewegliche Spannflansch gemäss einer ersten Ausführungsform im Wesentlichen halbkreisförmig ausgebildet und dem Sitz angepasst, indem er eine Gegenfläche, eine erste Gegennute und einen ersten Gegenring umfasst, wobei im verriegelten Zustand des beweglichen Spannflanschs die erste Gegennute den ersten Haltering umfasst und der erste Gegenring in die erste Haltenute eingreift.

Speziell bevorzugt wird, dass am feststehenden Flansch des erfindungsgemässen höhenverstellbaren Hydranten zumindest ein radial um ein Überstehmass gegen innen abstehender, mit seiner Breite der Nutenweite der Ringnuten angepasster Haltenocken mit einer bestimmten Länge angeordnet ist, wobei der zumindest eine Haltenocken entsprechend der gewählten Grabentiefe in zumindest eine der Ringnuten des Teleskoprohrs eingreifend ausgebildet ist. In diesem Fall wird besonders bevorzugt, dass das Teleskoprohr an seinem Aussenumfang zumindest eine Längsnute umfasst, deren Breite grösser ist als die Länge und deren Tiefe grösser ist als das Überstehmass des zumindest einen, am feststehenden Flansch angeordneten Haltenocken, so dass das Teleskoprohr in der Höhe frei verschiebbar ist, wenn die Längsnute um den zumindest einen, am feststehenden Flansch angeordneten Haltenocken herum ausgerichtet ist, und wenn sich der bewegliche Spannflansch in einer Offenstellung befindet.

Diese verbesserte Ausbildung des Teleskoprohrs hat den Vorteil, dass das Teleskoprohr einfach in die gewünschte Höhenlage ausgezogen werden und dann in dieser Höhenlage gegenüber dem Mantelrohr verdreht werden kann. Weil durch diese Verdrehung der zumindest eine Haltenocken am feststehenden Flansch in eine der Ringnuten am Aussenumfang des Teleskoprohrs eindringt, wird das Teleskoprohr nach dem Verdrehen in seiner Höhenposition sicher gehalten und kann nicht mehr unbeabsichtigt tiefer in das Mantelrohr eintauchen auch wenn sich der bewegliche Spannflansch noch in einer Offenstellung befindet.

Vorteile des erfindungsgemässen höhenverstellbaren Hydranten umfassen:
- Die einfache Konstruktion reduziert die Anzahl der Einzelteile.
- Das Vorsehen zumindest eines Haltenockens am feststehenden Flansch ermöglicht das sichere Halten des Teleskoprohrs in einer bestimmten Höhenposition auch wenn sich der bewegliche Spannflansch noch in einer Offenstellung befindet. Der Monteur hat dann beide Hände frei zum Verriegeln des beweglichen Spannflanschs.
- Das Verwenden von wenigen Bauteilen ermöglicht ein einfaches Handling beim Einstellen der Einbauhöhe des Hydranten; das Verwenden von nicht-verlierbaren Kleinteilen vereinfacht das Handling noch weiter.
- Das Vorsehen eines zweiteiligen beweglichen Spannflanschs ermöglicht das Verriegeln und Entriegeln des beweglichen Spannflanschs bei erhöhter Sicherheit; wobei zwei identische Spannflanschteile den Vorteil der Unverwechselbarkeit der Einzelteile und deren Herstellung zu reduzierten Kosten bieten.

Besonders bevorzugte Ausführungsformen und Anwendungen des erfindungsgemässen Hydrantenhauptventils sowie zusätzliche erfinderische Merkmale ergeben sich aus den abhängigen Ansprüchen.

Der erfindungsgemässe höhenverstellbare Hydrant wird nun an Hand von schematischen, lediglich einige ausgewählte, beispielhafte Ausführungsformen darstellenden und den Umfang der vorliegenden Erfindung nicht beschränkenden Zeichnungen näher erläutert. Dabei zeigt:
- Fig. 1: einen Vertikalschnitt durch einen ersten Überflurhydranten aus dem Stand der Technik (vgl. CH 675 139 A5);
- Fig. 2: einen vertikalen Teilschnitt durch einen höhenverstellbaren Hydranten aus dem Stand der Technik (vgl. DE 100 28 655 A1);
- Fig. 3: einen vertikalen Teilschnitt durch einen erfindungsgemässen höhenverstellbaren Hydranten mit einem in das Mantelrohr eingesetzten Teleskoprohr, dessen umlaufende Dichtung die Innenoberfläche des Mantelrohrs beaufschlägt, wobei der bewegliche Spannflansch und auch der feststehende Flansch einen Haltenocken umfassen, die beide in die gleiche Ringnute am Aussenumfang des Teleskoprohrs eindringen;
- Fig. 4: einen oberen Teil des Mantelrohrs eines erfindungsgemässen höhenverstellbaren Hydranten mit einem Sitz für einen beweglichen Spannflansch;
- Fig. 5: einen einteiligen beweglichen und an den Sitz im Mantelrohr von Fig. 4 angepassten Spannflansch;
- Fig. 6: ein ganzes Teleskoprohr eines erfindungsgemässen höhenverstellbaren Hydranten mit sieben Ringnuten und zwei Längsnuten;
- Fig. 7: einen zweiteiligen beweglichen und an den Sitz im Mantelrohr von Fig. 4 angepassten Spannflansch;
- Fig. 8: einen Vertikalschnitt entlang der Linie A-A durch den beweglichen Spannflansch von Fig. 7;
- Fig. 9: eine nicht-verlierbare Spannschraube;
- Fig. 10: Draufsichten auf zwei unterschiedliche Ausführungsformen der Verbindung zwischen zumindest einem am Mantelrohr feststehenden Flansch und mindestens einem beweglichen Spannflansch, wobei:
- Fig. 10A: einen zumindest annähernd als Halbring ausgebildeten, feststehenden Flansch mit einem Sitz für einen im Wesentlichen halbkreisförmig ausgebildeten, beweglichen Spannflansch; und
- Fig. 10B: zwei zumindest annähernd als Viertelring ausgebildete, feststehende Flansche mit zwei Sitzen für zwei im Wesentlichen viertelkreisförmig ausgebildete, bewegliche Spannflansche zeigt;
- Fig. 11: eine Draufsicht auf einen alternativen, im Wesentlichen halbkreisförmig ausgebildeten Spannflansch mit zwei Haltenocken und einem Richtnocken.

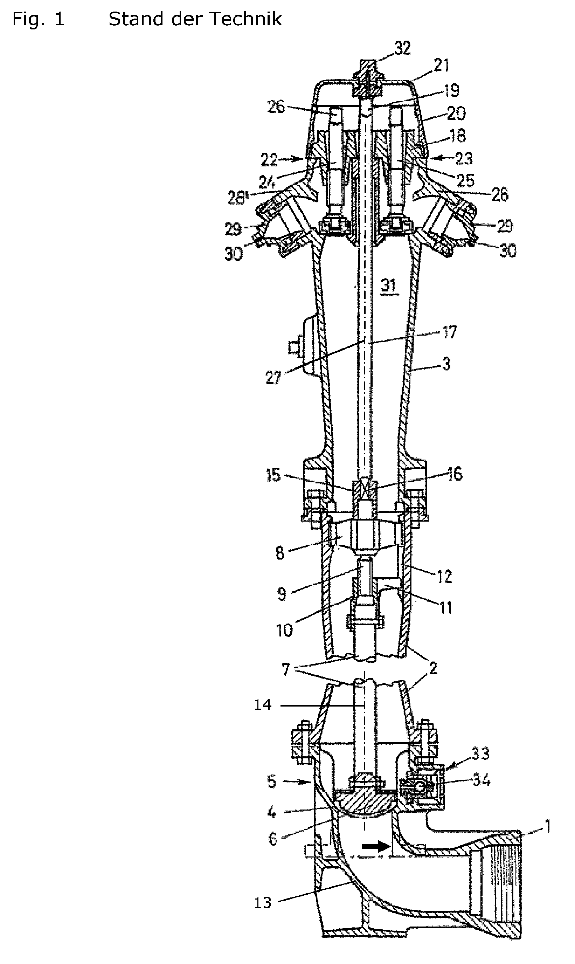

Der erfindungsgemässe höhenverstellbare Hydrant wird im Folgenden näher beschrieben. Beispielhafte Überflurhydranten bzw. höhenverstellbare Hydranten, wie diese aus dem Stand der Technik (vgl. CH 675 139 A5 bzw. DE 100 28 655 A1) bekannt und in den Figuren 1 bzw. 2 gezeigt sind, wurden bereits beschrieben.

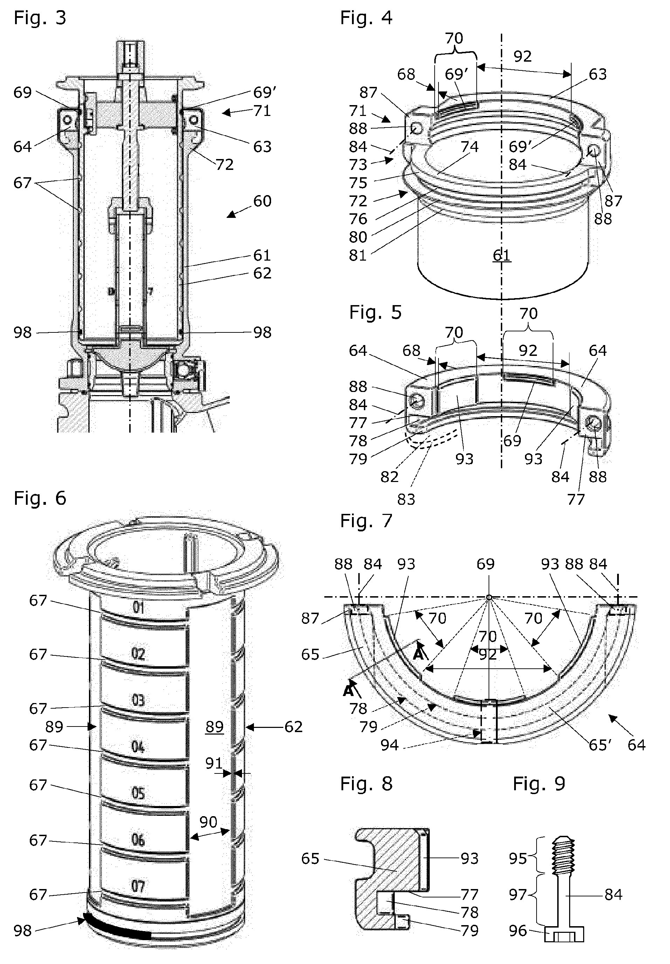

Die Figur 3 zeigt einen vertikalen Teilschnitt durch einen erfindungsgemässen höhenverstellbaren Hydranten 60 mit einem in das Mantelrohr 61 eingesetzten Teleskoprohr 62, dessen umlaufende Dichtung 98 die Innenoberfläche des Mantelrohrs 61 beaufschlägt, wobei der bewegliche Spannflansch 64 und auch der feststehende Flansch 63 einen Haltenocken 69,69' umfassen, die beide in die gleiche Ringnute 67 am Aussenumfang des Teleskoprohrs 62 eindringen. Die umlaufende, ringförmige Dichtung 98 kann z.B. als O-Ring, als X-Ring oder als Lippendichtung ausgebildet sein, wobei das Verwenden eines O-Rings bevorzugt ist.

Speziell bevorzugt ist ein derartiger höhenverstellbarer Hydrant 60, der ein Mantelrohr 61 und ein in diesem drehbar und höhenverschieblich angeordnetes Teleskoprohr 62 mit je einem kreisrunden Querschnitt umfasst, wobei das Teleskoprohr 62 entsprechend einer gewählten Grabentiefe mittels einer Verbindung zwischen zumindest einem am Mantelrohr 61 feststehenden Flansch 63 und mindestens einem beweglichen Spannflansch 64 am Mantelrohr 61 fixierbar ist. Dabei weist das Teleskoprohr 62 an seinem Aussenumfang eine Vielzahl radial angeordneter, zu einander beabstandeter Ringnuten 67 mit einer konstanten Nutenweite auf.

Ein solcher höhenverstellbarer Hydrant 60 ist erfindungsgemäss dadurch gekennzeichnet, dass der zumindest eine feststehende Flansch 63 und der zumindest eine bewegliche Spannflansch 64 teilkreisförmig ausgebildet sind, wobei am mindestens einen feststehenden Flansch 63 und/oder am mindestens einen beweglichen Spannflansch 64 zumindest ein radial um ein Überstehmass 68 gegen innen abstehender, mit seiner Breite der Nutenweite der Ringnuten 67 angepasster Haltenocken 69 mit einer bestimmten Länge 70 angeordnet ist. Dabei ist der zumindest eine Haltenocken 69 entsprechend der gewählten Grabentiefe in zumindest eine der Ringnuten 67 des Teleskoprohrs 62 eingreifend ausgebildet.

Wird ein derartiger höhenverstellbarer Hydrant 60 unter Druck mit Wasser gefüllt, so muss ein unbeabsichtigtes Anheben des Teleskoprohrs 62 gegenüber dem Mantelrohr 61 verhindert werden. Dies gelingt bei einem Wasserdruck von wenigen bar (z.B. 1-5 bar) mittels entsprechend dimensionierter Spannschrauben 84, die den zumindest einen beweglichen Spannflansch 64 am feststehenden Flansch 63 des Hydranten 60 fixieren. Dabei greift zumindest ein Haltenocken 69 des beweglichen Spannflanschs 64 in zumindest eine der Ringnuten 67 des Teleskoprohrs 62 ein und verhindert das unbeabsichtigte Anheben des Teleskoprohrs 62 gegenüber dem Mantelrohr 61.

Bei einem höheren Betriebsdruck, insbesondere bei einem Betriebsdruck von bis zu 16 bar oder bei einem Prüfdruck von bis zu 30 bar ist es von Vorteil, zusätzliche Sicherungselemente gegen ein unbeabsichtigtes Anheben des Teleskoprohrs 62 gegenüber dem Mantelrohr 61 vorzusehen. Speziell bevorzugt ist in solchen Fällen, dass am feststehenden Flansch 63 zumindest ein radial um das Überstehmass 68 gegen innen abstehender, mit seiner Breite der Nutenweite der Ringnuten 67 angepasster Haltenocken 69' mit einer bestimmten Länge 70 angeordnet ist, wobei der zumindest eine Haltenocken 69' des feststehenden Flanschs 63 entsprechend der gewählten Grabentiefe in zumindest eine der Ringnuten 67 des Teleskoprohrs 62 eingreifend ausgebildet ist. Das Anordnen zusätzlicher Haltenocken 69' am feststehenden Flansch 63 verbessert einerseits den Schutz vor einem unbeabsichtigten Anheben des Teleskoprohrs 62 gegenüber dem Mantelrohr 61 wesentlich, weil diese Haltenocken fest und unverrückbar mit dem Mantelrohr 61 verbunden sind. Damit werden die Spannschrauben 84 merklich aber nicht vollständig entlastet, weil diese über den mindestens einen Haltenocken 69 am beweglichen Spannflansch 64 noch immer auf Scherung belastet sind.

Andererseits bringt das Anordnen von Haltenocken 69' am feststehenden Flansch 63 den Vorteil, dass das Teleskoprohr 62 in seiner Höhe verstellt und dann ohne Verwendung eines Werkzeugs blockiert werden kann. Allerdings ist dies nur möglich, wenn das Teleskoprohr 62 an seinem Aussenumfang zumindest eine Längsnute 89 umfasst, deren Breite 90 grösser ist als die Länge 70 und deren Tiefe 91 grösser ist als das Überstehmass 68 des zumindest einen, am feststehenden Flansch 63 angeordneten Haltenockens 69'. Somit ist das Teleskoprohr 62 in der Höhe frei verschiebbar, wenn die Längsnute 89 (durch entsprechendes Drehen und Positionieren des Teleskoprohrs 62) um den zumindest einen, am feststehenden Flansch 63 angeordneten Haltenocken 69' herum ausgerichtet ist, und wenn sich der bewegliche Spannflansch 64 in einer Offenstellung befindet. In der Praxis wird deshalb sehr geschätzt, dass man das Teleskoprohr 62 so auf die gewünschte Höhe ausziehen und dann durch einfaches Verdrehen fixieren kann, weil beim Verdrehen der zumindest eine am feststehenden Flansch 63 sitzende Haltenocken 69' in eine der Ringnuten 67 des Teleskoprohrs 62 eingreift und dieses am Zurücksinken hindert. Für den Monteur eine grosse Erleichterung bedeutet dieses Fixieren der Höhe des Teleskoprohrs 62 durch Verdrehen, dass er zum endgültigen Fixierend des beweglichen Spannflanschs 64 in seiner Verriegelungsstellung am feststehenden Flansch 63 beide Hände zum Arbeiten frei hat.

Alternativ kann vorgesehen sein, dass jeder am feststehenden Flansch 63 angeordnete Haltenocken 69' und/oder jeder am beweglichen Spannflansch 64 angeordnete Haltenocken 69 als gleichzeitig in zwei zu einander beabstandete Ringnuten 67 des Teleskoprohrs 62 eingreifend ausgebildet ist.

Speziell bevorzugt ist in solchen Fällen (also bei einem Wasserdruck im Hydranten 60 von etwa 5 bis 30 bar) zudem, dass das Mantelrohr 61 an einem oberen Ende 71 einen ringförmigen Aufsatz 72 umfasst, über dem zumindest ein teilkreisförmiger Sitz 73 für den mindestens einen beweglichen Spannflansch 64 und zumindest ein teilkreisförmiger, feststehender Flansch 63 angeordnet sind. Dabei umfasst jeder Sitz 73 eine Auflagefläche 74, einen ersten Haltering 75 und eine erste Haltenute 76 (vgl. Fig. 4). Zudem wird bevorzugt, dass jeder bewegliche Spannflansch 64 teilkreisförmig ausgebildet und dem entsprechenden Sitz 73 angepasst ist, indem er eine Gegenfläche 77, eine erste Gegennute 78 und einen ersten Gegenring 79 umfasst (vgl. Fig. 5). Dabei umfasst im verriegelten Zustand des zumindest einen beweglichen Spannflanschs 64 jeweils die erste Gegennute 78 den ersten Haltering 75 und der erste Gegenring 79 greift in die erste Haltenute 76 ein.

Im Gegensatz zum vorher beschriebenen Beispiel bei einem Betriebsdruck von etwa 1-5 bar wird hier bei den höheren Betriebsdrücken von etwa 5 bis 16 bar und bei Prüfdrücken von etwa 10 bis 30 bar das unbeabsichtigte Anheben des Teleskoprohrs 62 gegenüber dem Mantelrohr 61 nicht mehr durch Spannschrauben 84 verhindert, sondern die durch den hohen Wasserdruck entstehenden Kräfte greifen nun an der formschlüssigen Verriegelung zwischen die erste Gegennute 78 und dem ersten Haltering 75 an. Entsprechend können die nun nicht mehr auf Scherung belasteten Spannschrauben 84 schlanker dimensioniert und insbesondere als nicht-verlierbare Schauben (vgl. Fig. 9) ausgebildet sein.

Eine zusätzliche Absicherung des höhenverstellbaren Hydranten 60 gegen ein unbeabsichtigtes Anheben des Teleskoprohrs 62 gegenüber dem Mantelrohr 61 bei höchsten Betriebsdrücken bzw. Prüfdrücken wird vorzugsweise dadurch erreicht, dass der ringförmige Aufsatz 72 des Mantelrohrs 61 zumindest einen zweiten Haltering 80 und zumindest eine zweite Haltenute 81 umfasst (vgl. Fig. 4), und dass der zumindest eine bewegliche Spannflansch 64 zumindest eine zweite Gegennute 82 und zumindest einen zweiten Gegenring 83 umfasst (vgl. Fig. 5), wobei im verriegelten Zustand des zumindest einen beweglichen Spannflanschs 64 jeweils die zweite Gegennute 82 den zweiten Haltering 80 umfasst und jeweils der zweite Gegenring 83 in die zweite Haltenute 81 eingreift.

Vorzugsweise umfasst das Mantelrohr 61 oder der zumindest eine bewegliche Spannflansch 64 des höhenverstellbaren Hydranten 60 Befestigungsmittel zum Verriegeln des zumindest einen beweglichen Spannflanschs 64 am zumindest einen feststehenden Flansch 63. Dabei sind diese Befestigungsmittel bevorzugt ausgewählt aus einer Gruppe, die Spannschrauben 84, Spannhebel, Spannhaken und beliebige Kombinationen derselben umfasst. Diese Befestigungsmittel können auch mit dem jeweiligen beweglichen Spannflansch 64 verbunden oder separat anlieferbar ausgebildet sein.

Die Figur 4 zeigt einen oberen Teil des Mantelrohrs 61 eines erfindungsgemässen höhenverstellbaren Hydranten 60 mit einem Sitz 73 für zumindest einen beweglichen Spannflansch 64. Vorzugsweise umfasst (wie hier gezeigt) der feststehende Flansch 63 des Mantelrohrs 61 eines erfindungsgemässen höhenverstellbaren Hydranten 60 zwei zueinander diametral angeordnete und im Wesentlichen radial ausgerichtete Befestigungskloben 87. Mit diesen Befestigungskloben 87 können die vorgenannten Befestigungsmittel verbunden sein. Alternativ können die vorgenannten Befestigungsmittel, falls diese beispielsweise mit einem der beweglichen Spannflansche 64 verbunden sind, an einem dieser Befestigungskloben 87 angreifen. Vorzugsweise ist bei der hier gezeigten Ausführungsform eines einteiligen und direkt an die Befestigungskloben 87 anschliessenden, feststehenden Flanschs 63 jeder der beiden Befestigungskloben 87 als Schraubkloben ausgebildet und umfasst je ein tangential und im Wesentlichen horizontal ausgerichtetes Schraubenloch 88 zum Aufnehmen einer Spannschraube 84. Der hier abgebildete feststehende Flansch 63 ist zumindest annähernd als Halbring ausgebildet; der hier ebenfalls abgebildete Sitz 73 für den mindestens einen beweglichen Spannflansch 64 ist im Wesentlichen halbkreisförmig ausgebildet.

Zum Fixieren des beweglichen Spannflanschs 64 in seiner Verriegelungsposition kann vorgesehen sein, dass der feststehende Flansch 63 und der bewegliche Spannflansch 64 je zwei Schraubenlöcher 88 mit einem Innengewinde für zwei Spannschrauben 84 aufweisen. Diese Spannschrauben 84 können entweder massiv (vorzugsweise für Hydranten 60, die nur niedrigen Drücken von wenigen bar ausgesetzt sind) oder als unverlierbare Spannschrauben 84 (vorzugsweise für Hydranten 60, die auch sehr hohen Drücken von bis zu 30 bar ausgesetzt sind) ausgebildet sein. Die Schraubenlöcher 88 an den Befestigungskloben 87 können als Sacklöcher oder als Durchgangslöcher ausgebildet sein, so dass im zweiten Fall eine oder beide Spannschrauben 84 von "vorne" oder "hinten" in jeweils ein als Durchgangsloch ausgebildetes Schraubenloch 88 eingedreht werden können.

Speziell bevorzugt wird, dass am feststehenden Flansch 63 zwei radial um das Überstehmass 68 gegen innen abstehende, mit ihrer Breite der Nutenweite der Ringnuten 67 angepasste Haltenocken 69' mit einer bestimmten Länge 70 und in einem Abstand 92 zueinander angeordnet sind. Dabei wird besonders bevorzugt, dass das Teleskoprohr 62 an seinem Aussenumfang zwei in einem Abstand zueinander angeordnete Längsnuten 89 umfasst, deren Breite 90 grösser ist als die bestimmte Länge 70 und deren Tiefe 91 grösser ist als das Überstehmass 68 der zwei am feststehenden Flansch 63 angeordneten Haltenocken 69', und deren Abstand zueinander dem Abstand 92 der am feststehenden Flansch 63 angeordneten Haltenocken 69' entspricht, so dass das Teleskoprohr 62 in der Höhe frei verschiebbar ist, wenn jede der beiden Längsnuten 89 um je einen der zwei am feststehenden Flansch 63 angeordneten Haltenocken 69' herum ausgerichtet sind (vgl. auch Fig. 6).

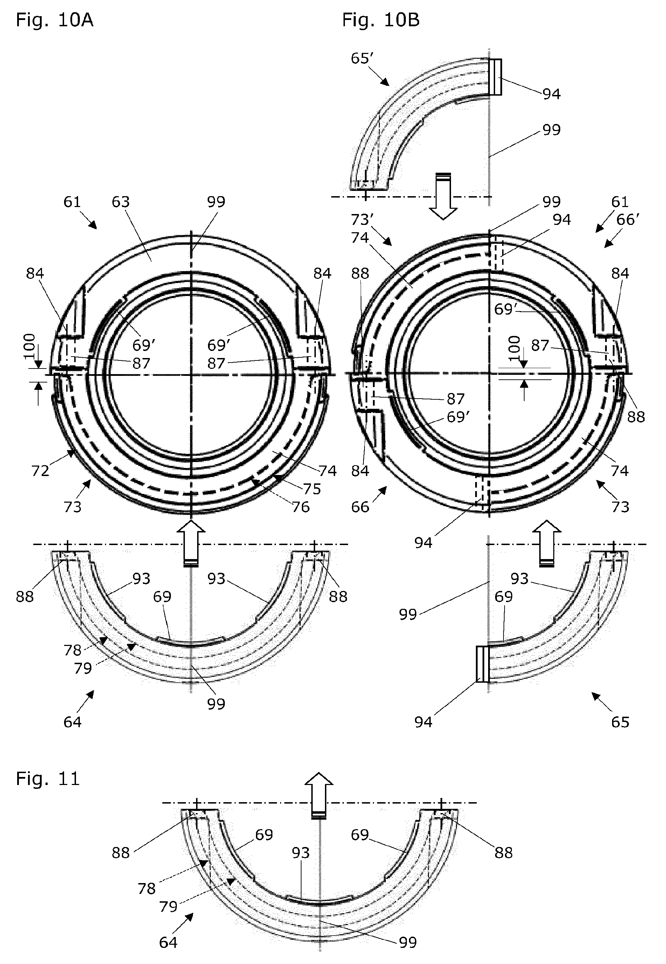

Die Figur 5 zeigt einen einteiligen und an den Sitz 73 im Mantelrohr 61 von Fig. 4 angepassten beweglichen Spannflansch 64. Dieser bewegliche Spannflansch 64 ist im Wesentlichen halbkreisförmig ausgebildet und mittels zweier Spannschrauben 84 am feststehenden Flansch 63 in seiner Verriegelungsstellung reversibel fixierbar (vgl. auch Fig. 10A). Anstelle eines oder beider gezeigten Schraubenlöcher 88 könnten am beweglichen Spannflansch 64 ein oder zwei Spannhebel befestigt sein, die beim Verriegeln des Spannflanschs 64 beispielsweise mit einer Spannschraube 84 oder einem zweiten Spannhebel zusammenwirken und hinter entsprechend geformten Befestigungskloben 87 eingreifen (nicht gezeigt).

Die Figur 6 zeigt ein ganzes Teleskoprohr 62 eines erfindungsgemässen höhenverstellbaren Hydranten 60 mit sieben Ringnuten 67 und zwei Längsnuten 89. Für einen Hydranten 60, bei dem der feststehende Flansch 63 mit mindestens einem Haltenocken 69' ausgerüstet ist (vgl. auch Fig. 4) wird bevorzugt, dass das Teleskoprohr 62 an seinem Aussenumfang zumindest eine Längsnute 89 umfasst, deren Breite 90 grösser ist als die Länge 70 und deren Tiefe 91 grösser ist als das Überstehmass 68 des zumindest einen, am feststehenden Flansch 63 angeordneten Haltenockens 69'. Ein derart ausgestattetes Teleskoprohr 62 ist in der Höhe frei verschiebbar, wenn die Längsnute 89 um den zumindest einen, am feststehenden Flansch 63 angeordneten Haltenocken 69' herum ausgerichtet ist, und wenn sich der bewegliche Spannflansch 64 in einer Offenstellung befindet.

Vorzugsweise sind die radial am Teleskoprohr 62 angeordneten Ringnuten 67 mit einer konstanten Nutenweite in einem gleichmässigen axialen Abstand zueinander angeordnet, wobei dieser axiale Abstand 2 cm bis 25 cm beträgt. Ein axialer Abstand von 5 cm ist besonders bevorzugt.

Die Figur 7 zeigt einen zweiteiligen und an den Sitz 73 im Mantelrohr 61 von Fig. 4 angepassten beweglichen Spannflansch 64. Auch in diesem Fall ist der feststehende Flansch 63 einteilig (vgl. Fig. 4) und zumindest annähernd als Halbring ausgebildet und der Sitz 73 für den mindestens einen beweglichen Spannflansch 64 ist im Wesentlichen halbkreisförmig ausgebildet. Der hier abgebildete bewegliche Spannflansch 64 ist zweiteilig ausgebildet, wobei die beiden beweglichen Spannflanschteile 65,65' zumindest annähernd als Viertelringe und mittels einer radial oder in einem Winkel dazu verlaufenden formschlüssigen Verbindung 94 ineinander steckbar ausgebildet sind. Diese formschlüssige Verbindung 94 beruht vorzugsweise auf dem formschlüssigen Ineinandergreifen zweier gefräster Profile, wie dies beispielsweise bei einer Schwalbenschwanzverbindung der Fall ist. Beim hier abgebildeten beweglichen Spannflansch 64 ist jeder bewegliche Spannflanschteil 65,65' mittels einer Spannschraube 84 individuell am feststehenden Flansch 63 in seiner Verriegelungsstellung reversibel fixierbar. Damit ist jeder der beiden beweglichen Spannflanschteile 65,65' einzeln mittels einer im Wesentlichen tangential zum Aussenumfang des Teleskoprohrs 62 ausgerichteten Spannschraube 84 am feststehenden Flansch 63 in seiner Verriegelungsstellung reversibel fixierbar, wobei die beispielsweise als Schwalbenschwanzverbindung ausgeführte formschlüssige Verbindung 94 zwischen den beiden beweglichen Spannflanschteilen 65,65' beim Fixieren des jeweils zweiten beweglichen Spannflanschteils 65,65' zusammenfügbar ist.

Es kann auch vorgesehen sein, die formschlüssige Verbindung der beiden beweglichen Spannflanschteile 65,65' so auszubilden, dass diese mit zusammengefügter formschlüssiger Verbindung 94 mittels zweier, im Wesentlichen parallel zueinander und tangential zum Aussenumfang des Teleskoprohrs 62 ausgerichteter Spannschrauben 84 am feststehenden Flansch 63 in einer Verriegelungsstellung reversibel fixierbar sind.

Vorzugsweise werden die Bauteile am Mantelrohr 61, wie z.B. die Befestigungskloben 87, die Haltenocken 69,69' und die Richtnocken 93 am zumindest einen feststehenden Flansch 63 und am zumindest einen beweglichen Spannflansch 64 in einer bestimmten Symmetrie angeordnet, wie dies in den Figuren 4 bis 7 schematisch angedeutet ist. Dasselbe gilt für die Bauteile am Teleskoprohr 62 (z.B. die Längsnute 89), die vorzugsweise in ihrer Anordnung, Grösse und Geometrie den Bauteilen am Mantelrohr 61 entsprechend angepasst werden. So gelten in einer bevorzugten Ausführungsform des erfindungsgemässen Hydranten 60 die folgenden Bedingungen:
- jeder Haltenocken 69,69' und jeder Richtnocken 93 weist eine Länge auf, die einem Zentriwinkel von 40° entspricht;
- zwei am feststehenden Flansch 63 oder am beweglichen Spannflansch 64 radial um das Überstehmass 68 gegen innen abstehende Haltenocken 69',69 sind um einen Zentriwinkel von 80° voneinander beabstandet;
- zwei am beweglichen Spannflansch 64 oder am feststehenden Flansch 63 radial um das Überstehmass 68 gegen innen abstehende Richtnocken 93 sind um einen Zentriwinkel von 80° voneinander beabstandet;
- zwei am Aussenumfang des Teleskoprohrs 63 angeordneten Längsnuten 89 sind um einen Zentriwinkel von 80° voneinander beabstandet.

Von diesen Bedingungen können beliebige, sinngemässe Abweichungen gewählt werden, so dass z.B. gilt:
- jeder Haltenocken 69,69' und jeder Richtnocken 93 weist eine Länge auf, die einem Zentriwinkel von 30° entspricht;
- zwei am feststehenden Flansch 63 oder am beweglichen Spannflansch 64 radial um das Überstehmass 68 gegen innen abstehende Haltenocken 69',69 sind um einen Zentriwinkel von 90° voneinander beabstandet;
- zwei am beweglichen Spannflansch 64 oder am feststehenden Flansch 63 radial um das Überstehmass 68 gegen innen abstehende Richtnocken 93 sind um einen Zentriwinkel von 90° voneinander beabstandet;
- zwei am Aussenumfang des Teleskoprohrs 63 angeordneten Längsnuten 89 sind um einen Zentriwinkel von 90° voneinander beabstandet.

Von diesen Bedingungen abweichend kann als Alternative das Vorsehen von nur einem Haltenocken und nur einem Richtnocken gewählt werden, so dass z.B. gilt:
- jeder Haltenocken 69,69' und jeder Richtnocken 93 weist eine entsprechende Länge auf, die einem Zentriwinkel von 30° bis 120° entspricht (nicht gezeigt);
- am feststehenden Flansch 63 bzw. am beweglichen Spannflansch 64 ist ein einzelner radial um das Überstehmass 68 gegen innen abstehender Haltenocken 69',69 angeordnet (nicht gezeigt);
- am beweglichen Spannflansch 64 bzw. am feststehenden Flansch 63 ist ein einzelner radial um das Überstehmass 68 gegen innen abstehender Richtnocken 93 angeordnet (nicht gezeigt);
- am Aussenumfang des Teleskoprohrs 63 ist eine einzelne Längsnute 89 mit einer Breite angeordnet, die einem Zentriwinkel von etwa 32° bis 122° entspricht (nicht gezeigt).

Die Figur 8 zeigt einen Vertikalschnitt entlang der Linie A-A durch den beweglichen Spannflansch 64 von Fig. 7, bzw. durch den dort abgebildeten, beweglichen Spannflanschteil 65. Gut sichtbar ist hier die Gegenfläche 77 mit der der bewegliche Spannflansch 64 auf der Auflagefläche 74 des Mantelrohrs 61 bevorzugt aufliegt, so dass der bewegliche Spannflansch 64 von einem Monteur einfach in dessen Verriegelungsposition geschoben werden kann. Die erste Gegennute 78 umfasst wie bereits beschrieben vorzugsweise den ersten Haltering 75 und der erste Gegenring 79 greift wie bereits beschrieben vorzugsweise in die erste Haltenute 76 ein, wenn sich der bewegliche Spannflansch 64 in dessen Verriegelungsposition befindet (vgl. auch Fig. 4 und 5). Der Richtnocken 93 reicht hier von der Gegenfläche 77 bis zur oberen Oberfläche des beweglichen Spannflanschteils 65.

Die Figur 9 zeigt eine bevorzugte Form einer nicht-verlierbaren Spannschraube 84, die an ihrem vorderen Ende ein Gewindeteil mit einem entsprechenden Aussengewinde 95, an ihrem Hinterende einen Schraubenkopf 96 sowie einen vom Gewindeteil bis zum Schraubenkopf reichenden Hinterstich 97 umfassen.

Die Figur 10 zeigt Draufsichten auf zwei unterschiedliche Ausführungsformen der Verbindung zwischen zumindest einem am Mantelrohr 61 feststehenden Flansch 63 und mindestens einem beweglichen Spannflansch 64. Die Fig. 10A zeigt ein Mantelrohr 61 mit einem zumindest annähernd als Halbring ausgebildeten, feststehenden Flansch 63 und mit einem Sitz 73 für einen im Wesentlichen halbkreisförmig ausgebildeten, beweglichen Spannflansch 64, so wie diese bereits in den Fig. 4 und 5 vorgestellt und beschrieben worden sind. In dieser Fig. 10A wird nun deutlich, dass sowohl der feststehenden Flansch 63 als auch der Sitz 73 und der hier einteilige Spannflansch 64 gegenüber der in der Fig. 10A gezeigten Achse 99 exakt spiegelsymmetrisch gebaut sind. Die beiden Schraubenlöcher 88 in den jeweiligen Befestigungskloben 67 verlaufen hier parallel zu der Achse 99. Entsprechend wird ein höhenverstellbarer Hydrant 60 vorgeschlagen, bei der feststehende Flansch 63 einteilig und zumindest annähernd als Halbring ausgebildet und der Sitz 73 für den mindestens einen beweglichen Spannflansch 64 im Wesentlichen halbkreisförmig ausgebildet ist. Der bewegliche Spannflansch 64 ist dem Sitz 73 angepasst und einteilig ausgebildet, wobei der Wesentlichen halbkreisförmige bewegliche Spannflansch 64 mittels zweier Spannschrauben 84 am feststehenden Flansch 63 in seiner Verriegelungsstellung reversibel fixierbar ist (vgl. Pfeil).

Aus dieser Abbildung wird zudem klar, dass hier die beiden Befestigungskloben 87 Teile des feststehenden Flanschs 63 sind. Zudem wird klar, dass sich der feststehende Flansch 63 (d.h. in diesem Fall die beiden Befestigungskloben 87) sich nicht bis zu der Achse erstrecken, die rechtwinklig zur Achse 99 gezeichnet ist. Ebenso erstreckt sich der bewegliche Spannflansch 64 nicht bis zu dieser Achse, so dass der bewegliche Spannflansch 64 in seiner Verriegelungsstellung, in welcher er mit dem Sitz 73 einen Formschluss eingeht, den feststehende Flansch 63 nicht berührt. Tatsächlich ist bevorzugt, dass sich zwischen dem sich in der Verriegelungsstellung befindenden, beweglichen Spannflansch 64 und dem feststehenden Flansch 63 ein Zwischenraum 100 befindet, wodurch eine Überdefinierung der Verriegelungsstellung verhindert wird.

Die Fig. 10B zeigt zwei zumindest annähernd als Viertelring ausgebildete, feststehenden Flansche bzw. Flanschteile 66,66' mit zwei Sitzen 73 für zwei im Wesentlichen viertelkreisförmig ausgebildete, bewegliche Spannflanschteile 65,65' zeigt. Der feststehende Flansch 63 ist also zweiteilig ausgebildet und jeder der beiden feststehenden Flanschteile 66,66' ist zumindest annähernd als Viertelring ausgebildet. Der Aufsatz 72 des Mantelrohrs 61 umfasst hier zwei im Wesentlichen viertelkreisförmig ausgebildete Sitze 73,73' für den zumindest einen beweglichen Spannflansch 64. Der bewegliche Spannflansch 64 ist hier zweiteilig ausgebildet, wobei jeder der beiden beweglichen Spannflanschteile 65,65' zumindest annähernd als Viertelring ausgebildet, dem jeweiligen Sitz 73,73' angepasst und mittels einer, im Wesentlichen tangential zum Aussenumfang des Teleskoprohrs 62 ausgerichteten Spannschraube 84 am feststehenden Flansch 63 in seiner Verriegelungsstellung reversibel fixierbar ist.

Aus der Abbildung wird klar, dass jeder der beiden Spannflanschteile 65,65' auf einer Seite formschlüssig mit dem entsprechenden, feststehenden Flanschteil 66,66' verbunden, bzw. wie gezeigt verbindbar ist. Diese formschlüssige Verbindung 94 kann entsprechend der bereits in Fig. 7 gezeigten und beschriebenen formschlüssigen Verbindung 94 ausgebildet sein. Somit kann jeder der beiden Spannflanschteile 65,65' individuell in seine Verriegelungsstellung geschoben werden (vgl. Pfeile), wobei er einerseits mit einem feststehenden Flanschteil 66,66' eine formschlüssige Verbindung 94 eingeht und andererseits mit dem anderen feststehenden Flanschteil 66,66' verschraubt werden kann. Parallel zur Achse 99 ausgerichtete formschlüssige Verbindungen 94 erlauben dieses Schieben der beiden Spannflanschteile 65,65' in deren Verriegelungsstellung und blockieren gleichzeitig Bewegung der beiden Spannflanschteile 65,65' in einer Richtung rechtwinklig zur Achse 99, so dass sich beide Spannflanschteile 65,65' in ihrer Verriegelungsstellung unverrückbar, aber reversibel fixieren lassen.

Die Figur 11 zeigt eine Draufsicht auf einen alternativen, im Wesentlichen halbkreisförmig ausgebildeten, beweglichen Spannflansch 64 mit zwei Haltenocken 69 und einem Richtnocken 93. Diese Anordnung der Haltenocken 69 und Richtnocken 93 entspricht dem genauen Gegenteil der in der Fig. 10A gezeigten Anordnung der Haltenocken 69 und Richtnocken 93 am beweglichen Spannflansch 64. Logischerweise muss deshalb die entsprechende alternative Anordnung der Haltenocken 69' und Richtnocken 93 am feststehenden Flansch 63 ebenfalls dem genauen Gegenteil der in der Fig. 10A gezeigten Anordnung der Haltenocken 69 und Richtnocken 93' am feststehenden Flansch 63 entsprechen (nicht gezeigt). Weil der feststehende Flansch 63 dieser alternativen Anordnung somit nur einen einzigen Haltenocken 69' aufweist (nicht gezeigt), wird diese alternative Anordnung (insbesondere bei hohen Lieferdrücken von etwa 5 bis 16 bar) weniger bevorzugt als die in Fig. 10A gezeigte, gemäss welcher zwei Haltenocken 69' am feststehenden Flansch 63 angeordnet sind.

In allen die vorliegende Erfindung betreffenden Figuren beziehen sich dieselben Bezugszeichen auf die gleichen Elemente, auch wenn diese nicht in jedem Fall ausführlich beschrieben sind. Beliebige Kombinationen der für die unterschiedlichen Ausführungsformen gezeigten oder beschriebenen Elemente gehören zum Umfang der vorliegenden Erfindung.

### Bezugszeichenlisten

**Stand der Technik:**

| | | | |
|---|---|---|---|
| 1 | Einlaufrohr | 26 | Betätigungsvierkant |
| 2 | Steigrohr | 27 | Achse von 17 |
| 3 | Aufsatzrohr | 28,28' | Ventilanschluss von 22,23 |
| 4 | Sitz von 5 | 29 | Schraubdeckel |
| 5 | Hauptabschlussventil | 30 | Bohrung |
| 6 | Ventilkörper von 5 | 31 | Innenraum |
| 7 | Ventilstange | 32 | Verschlusszapfen |
| 8 | Spindellager | 33 | Entwässerungsschutz |
| 9 | Spindel | 34 | Entwässerungsventil |
| 10 | Spindelmutter | 40 | Hydrant |
| 11 | Finger von 10 | 41 | Hauptabsperrorgan |
| 12 | Führung | 42 | Doppelabsperrorgan |
| 13 | Einlaufbogen | 43 | Hauptventilgehäuse |
| 14 | Achse von 7 | 44 | Mantelrohr |
| 15 | Spindelaufsatz | 45 | Teleskopsteigrohr |
| 16 | Vierkantbohrung | 46 | Verbindung |
| 17 | Spindelverlängerung | 47 | feststehender Gegenflansch |
| 18 | Gehäusedeckel | 48 | beweglicher Spannflansch |
| 19 | Betätigungsvierkant | 49 | Ringnuten (Aussengewinde) |
| 20 | Schutzdeckelunterteil | 50 | Innengewinde |
| 21 | Schutzdeckeloberteil | 51 | Gewindedichtung |
| 22,23 | Seitenventile | 52 | umlaufende Vertiefung von 47 |
| 24,25 | Spindeln von 22,23 | 53 | Führungsring |
| | | 54 | Fundamentring |

**Erfindung:**

| | | | |
|---|---|---|---|
| 60 | Hydrant | 80 | zweiter Haltering |
| 61 | Mantelrohr | 81 | zweite Haltenute |
| 62 | Teleskoprohr | 82 | zweite Gegennute |
| 63 | feststehender Flansch | 83 | zweiter Gegenring |
| 64 | beweglicher Spannflansch | 84 | Spannschraube |
| 65,65' | bewegliche Spannflanschteile | 87 | Befestigungskloben |
| 66,66' | feststehende Flanschteile | 88 | Schraubenloch |
| 67 | Ringnuten | 89 | Längsnute |
| 68 | Überstehmass | 90 | Breite von 89 |
| 69,69' | Haltenocken | 91 | Tiefe von 89 |
| 70 | bestimmte Länge von 69,69',93 | 92 | Abstand von 69,69',93 |
| 71 | oberes Ende von 61 | 93 | Richtnocken |
| 72 | ringförmiger Aufsatz von 61 | 94 | formschlüssige Verbindung |
| 73,73' | Sitz | 95 | Aussengewinde von 84 |
| 74 | Auflagefläche | 96 | Schraubenkopf von 84 |
| 75 | erster Haltering | 97 | Hinterstich von 84 |
| 76 | erste Haltenute | 98 | Dichtung |
| 77 | Gegenfläche | 99 | Achse |
| 78 | erste Gegennute | 100 | Zwischenraum |
| 79 | erster Gegenring | | |

## Patentansprüche

1. Höhenverstellbarer Hydrant (60), der ein Mantelrohr (61) und ein in diesem drehbar und höhenverschieblich angeordnetes Teleskoprohr (62) mit je einem kreisrunden Querschnitt umfasst, wobei das Teleskoprohr (62) entsprechend einer gewählten Grabentiefe mittels einer Verbindung zwischen zumindest einem am Mantelrohr (61) feststehenden Flansch (63) und mindestens einem beweglichen Spannflansch (64) am Mantelrohr (61) fixierbar ist, wobei das Teleskoprohr (62) an seinem Aussenumfang eine Vielzahl radial angeordneter, zu einander beabstandeter Ringnuten (67) mit einer konstanten Nutenweite aufweist, **dadurch gekennzeichnet, dass** der zumindest eine feststehende Flansch (63) und der zumindest eine bewegliche Spannflansch (64) teilkreisförmig ausgebildet sind, wobei zumindest je ein radial um ein Überstehmass (68) gegen innen abstehender, mit seiner Breite der Nutenweite der Ringnuten (67) angepasster Haltenocken (69,69') an einem beweglichen Spannflansch (64), oder an einem feststehenden Flansch (63), oder an einem beweglichen Spannflansch (64) und an einem feststehenden Flansch (63) mit jeweils einer bestimmten Länge (70) angeordnet ist, und wobei der zumindest eine Haltenocken (69,69') entsprechend der gewählten Grabentiefe in zumindest eine der Ringnuten (67) des Teleskoprohrs (62) eingreifend ausgebildet ist.

2. Höhenverstellbarer Hydrant (60) gemäss Anspruch 1, **dadurch gekennzeichnet, dass** der zumindest eine Haltenocken (69') am feststehenden Flansch (63) angeordnet ist.

3. Höhenverstellbarer Hydrant (60) gemäss Anspruch 1 oder 2, **dadurch gekennzeichnet, dass** der zumindest eine Haltenocken (69) am beweglichen Spannflansch (64) angeordnet ist.

4. Höhenverstellbarer Hydrant (60) gemäss einem der vorhergehenden Ansprüche, **dadurch gekennzeichnet, dass** das Mantelrohr (61) an einem oberen Ende (71) einen ringförmigen Aufsatz (72) umfasst, über dem zumindest ein teilkreisförmiger Sitz (73) für den mindestens einen beweglichen Spannflansch (64) und zumindest ein teilkreisförmiger, feststehender Flansch (63) angeordnet sind, wobei jeder Sitz (73) eine Auflagefläche (74), einen ersten Haltering (75) und eine erste Haltenute (76) umfasst, **und dass** jeder bewegliche Spannflansch (64) teilkreisförmig ausgebildet und dem entsprechenden Sitz (73) angepasst ist, indem er eine Gegenfläche (77), eine erste Gegennute (78) und einen ersten Gegenring (79) umfasst, wobei im verriegelten Zustand des zumindest einen beweglichen Spannflanschs (64) jeweils die erste Gegennute (78) den ersten Haltering (75) umfasst und der erste Gegenring (79) in die erste Haltenute (76) eingreift.

5. Höhenverstellbarer Hydrant (60) gemäss Anspruch 4, **dadurch gekennzeichnet, dass** der ringförmige Aufsatz (72) des Mantelrohrs (61) zumindest einen zweiten Haltering (80) und zumindest eine zweite Haltenute (81) umfasst, **und dass** der zumindest eine bewegliche Spannflansch (64) zumindest eine zweite Gegennute (82) und zumindest einen zweiten Gegenring (83) umfasst, wobei im verriegelten Zustand des zumindest einen beweglichen Spannflanschs (64) jeweils die zweite Gegennute (82) den zweiten Haltering (80) umfasst und jeweils der zweite Gegenring (83) in die zweite Haltenute (81) eingreift.

6. Höhenverstellbarer Hydrant (60) gemäss einem der vorhergehenden Ansprüche, **dadurch gekennzeichnet, dass** das Mantelrohr (61) oder der zumindest eine bewegliche Spannflansch (64) Befestigungsmittel zum Verriegeln des zumindest einen beweglichen Spannflanschs (64) am zumindest einen feststehenden Flansch (63) umfasst, wobei die Befestigungsmittel ausgewählt sind aus einer Gruppe, die Spannschrauben (84), Spannhebel, Spannhaken und beliebige Kombinationen derselben umfasst.

7. Höhenverstellbarer Hydrant (60) gemäss Anspruch 6, **dadurch gekennzeichnet, dass** der zumindest eine feststehende Flansch (63) des Mantelrohrs (61) zwei zueinander diametral angeordnete und im Wesentlichen radial ausgerichtete Befestigungskloben (87) umfasst, mit denen Befestigungsmittel verbunden sind oder an denen Befestigungsmittel angreifen.

8. Höhenverstellbarer Hydrant (60) gemäss Anspruch 7, **dadurch gekennzeichnet, dass** jeder der beiden Befestigungskloben (87) als Schraubkloben ausgebildet ist und je ein tangential und im Wesentlichen horizontal ausgerichtetes Schraubenloch (88) zum Aufnehmen einer Spannschraube (84) umfasst.

9. Höhenverstellbarer Hydrant (60) gemäss Anspruch 8, **dadurch gekennzeichnet, dass** der feststehende Flansch (63) einteilig und zumindest annähernd als Halbring ausgebildet und der Sitz (73) für den mindestens einen beweglichen Spannflansch (64) im Wesentlichen halbkreisförmig ausgebildet ist, **und dass** der bewegliche Spannflansch (64) dem Sitz (73) angepasst und einteilig ausgebildet ist, wobei der Wesentlichen halbkreisförmige bewegliche Spannflansch (64) mittels zweier Spannschrauben (84) am feststehenden Flansch (63) in seiner Verriegelungsstellung reversibel fixierbar ist.

10. Höhenverstellbarer Hydrant (60) gemäss Anspruch 8, **dadurch gekennzeichnet, dass** der feststehende Flansch (63) einteilig und zumindest annähernd als Halbring ausgebildet und der Sitz (73) für den mindestens einen beweglichen Spannflansch (64) im Wesentlichen halbkreisförmig ausgebildet ist, **und dass** der bewegliche Spannflansch (64) dem Sitz (73) angepasst und zweiteilig ausgebildet ist, wobei die beiden beweglichen Spannflanschteile (65,65') zumindest annähernd als Viertelringe und mittels einer radial oder in einem Winkel dazu verlaufenden formschlüssigen Verbindung (94) ineinander steckbar ausgebildet sind, und wobei jeder bewegliche Spannflanschteil (65,65') mittels einer Spannschraube (84) am feststehenden Flansch (63) in seiner Verriegelungsstellung reversibel fixierbar ist.

11. Höhenverstellbarer Hydrant (60) gemäss Anspruch 8, **dadurch gekennzeichnet, dass** der feststehende Flansch (63) zweiteilig ausgebildet und jeder der beiden feststehenden Flanschteile (66,66') zumindest annähernd als Viertelring ausgebildet ist, wobei der Aufsatz (72) des Mantelrohrs (61) zwei im Wesentlichen viertelkreisförmig ausgebildete Sitze (73,73') für den zumindest einen beweglichen Spannflansch (64) umfasst, **und dass** der bewegliche Spannflansch (64) zweiteilig ausgebildet ist, wobei jeder der beiden beweglichen Spannflanschteile (65,65') zumindest annähernd als Viertelring ausgebildet, dem jeweiligen Sitz (73) angepasst und mittels einer, im Wesentlichen tangential zum Aussenumfang des Teleskoprohrs (62) ausgerichteten Spannschraube (84) am feststehenden Flansch (63) in seiner Verriegelungsstellung reversibel fixierbar ist.

12. Höhenverstellbarer Hydrant (60) gemäss einem der Ansprüche 1 bis 11, **dadurch gekennzeichnet, dass** das Teleskoprohr (62) an seinem Aussenumfang zumindest eine Längsnute (89) umfasst, deren Breite (90) grösser ist als die Länge (70) und deren Tiefe (91) grösser ist als das Überstehmass (68) des zumindest einen, am feststehenden Flansch (63) und/oder am beweglichen Spannflansch (64) angeordneten Haltenockens (69',69), so dass das Teleskoprohr (62) in der Höhe frei verschiebbar ist, wenn die Längsnute (89) um den zumindest einen, am feststehenden Flansch (63) und/oder am beweglichen Spannflansch (64) angeordneten Haltenocken (69',69) herum ausgerichtet ist, und wenn sich der bewegliche Spannflansch (64) in einer Offenstellung befindet.

13. Höhenverstellbarer Hydrant (60) gemäss einem der Ansprüche 1 bis 11, **dadurch gekennzeichnet, dass** am feststehenden Flansch (63) zwei radial um das Überstehmass (68) gegen innen abstehende, mit ihrer Breite der Nutenweite der Ringnuten (67) angepasste Haltenocken (69') mit einer bestimmten Länge (70) und in einem Abstand (92) zueinander angeordnet sind.

14. Höhenverstellbarer Hydrant (60) gemäss Anspruch 13, **dadurch gekennzeichnet, dass** das Teleskoprohr (62) an seinem Aussenumfang zwei in einem Abstand zueinander angeordnete Längsnuten (89) umfasst, deren Breite (90) grösser ist als die bestimmte Länge (70) und deren Tiefe (91) grösser ist als das Überstehmass (68) der zwei am feststehenden Flansch (63) angeordneten Haltenocken (69'), und deren Abstand zueinander dem Abstand (92) der am feststehenden Flansch (63) angeordneten Haltenocken (69') entspricht, so dass das Teleskoprohr (62) in der Höhe frei verschiebbar ist, wenn jede der beiden Längsnuten (89) um je einen der zwei am feststehenden Flansch (63) angeordneten Haltenocken (69') herum ausgerichtet sind.

15. Höhenverstellbarer Hydrant (60) gemäss einem der Ansprüche 1 bis 11, **dadurch gekennzeichnet, dass** am feststehenden Flansch (63) ein einzelner radial um das Überstehmass (68) gegen innen abstehender, mit seiner Breite der Nutenweite der Ringnuten (67) angepasster Haltenocken (69') mit einer bestimmten Länge (70) angeordnet ist.

16. Höhenverstellbarer Hydrant (60) gemäss Anspruch 15, **dadurch gekennzeichnet, dass** das Teleskoprohr (62) an seinem Aussenumfang eine einzelne Längsnute (89) umfasst, deren Breite (90) grösser ist als die bestimmte Länge (70) und deren Tiefe (91) grösser ist als das Überstehmass (68) des einzelnen, am feststehenden Flansch (63) angeordneten Haltenockens (69'), so dass das Teleskoprohr (62) in der Höhe frei verschiebbar ist, wenn die Längsnute (89) um den am feststehenden Flansch (63) angeordneten Haltenocken (69') herum ausgerichtet ist.

17. Höhenverstellbarer Hydrant (60) gemäss einem der vorhergehenden Ansprüche, **dadurch gekennzeichnet, dass** am mindestens einen beweglichen Spannflansch (64) zumindest ein radial gegen innen abstehender Richtnocken (93) angeordnet ist, wobei jeder Richtnocken (93) um dasselbe Überstehmass (68) und über eine Länge, die kürzer ist als die bestimmte Länge (70) gegen innen abstehend ausgebildet ist wie ein Haltenocken (69,69'), aber eine Breite aufweist, die ein Mehrfaches der Nutenweite der Ringnuten (67) beträgt.

18. Höhenverstellbarer Hydrant (60) gemäss Anspruch 17, **dadurch gekennzeichnet, dass** das Teleskoprohr (62) gegen Rotation gesichert ist, wenn der zumindest eine am beweglichen Spannflansch (64) angeordnete Richtnocken (93) in einer Verriegelungsstellung des beweglichen Spannflanschs (64) in zumindest eine am Teleskoprohr (62) angeordnete Längsnute (89) eingreift.

19. Höhenverstellbarer Hydrant (60) gemäss einem der vorhergehenden Ansprüche, **dadurch gekennzeichnet, dass** das Teleskoprohr (62) in der Nähe seines unteren Endes eine ringförmig umlaufende Dichtung (98) umfasst, die das Teleskoprohr (62) gegenüber dem Mantelrohr (61) abdichtet.
